# EUROPEAN PATENT SPECIFICATION

(11) **EP 3 091 482 B1**
(45) Date of publication and mention of the grant of the patent: **12.12.2018**
(21) Application number: 15001407.4
(22) Date of filing: 08.05.2015
(51) Int. Cl.: G06K 19/077, B42D 25/00

(54) **METHOD FOR PRODUCING A DATA CARRIER AND DATA CARRIER**
VERFAHREN ZUR HERSTELLUNG EINES DATENTRÄGERS SOWIE DATENTRÄGER
PROCÉDÉ DE FABRICATION D'UN SUPPORT DE DONNÉES ET UN TEL SUPPORT

(43) Date of publication of application: 09.11.2016
(73) Proprietor: Giesecke+Devrient Mobile Security GmbH, 81677 München (DE)
(72) Inventor: Tarantino, Thomas, 83410 Laufen (DE); Virostek, Eric, Silver Lake, 44224 (US)

(56) References cited:
- EP-A2- 1 793 329
- US-A- 5 888 624

## Description

The invention relates to a method for producing of a data carrier, in particular formed as an IC card. Furthermore, the invention relates to a data carrier.

Data carriers, in particular formed as an IC (integrated chip) card, can be produced by various methods.

US 5,888,624 discloses a data carrier made of paper or cardboard with an electronic module and a method for producing same. To protect the edge of the paper IC card from splitting, special protecting lacquers are applied thereto with a spreading unit. The cards can be processed either individually or several in a stack simultaneously. The protecting lacquer may be transferred with a transfer band with the help of a heated die by a transfer method. The protecting lacquer can be colored and used as additional identification or an additional security feature. However, since the IC card consists of at least one of paper and card board, the protection of the edge of the card from splitting requires a treatment with a lacquer. The color within the protecting lacquer results in the problem that it can be difficult to find a desired color such that lots of efforts are necessary until the needed color is found.

EP 1 793 329 A2, WO 2015/180827 A1 and WO 2013/041808 A1 relate to methods for producing and personalizing data carriers.

Alternatively, data carriers can be produced with different layers of plastic or other materials. Typically, the used sheets of plastic are colored to ensure that the circumferential edge of the data carrier has a color being adapted to the color or design of an upper cover layer. However, this requires that the materials used for the different sheets have to be provided with fillers in the sheet material to achieve the desired or wished color. Without using such colored fillers, the different sheets or layers of the data carrier would be white or transparent (depending on the kind of plastic material). In case that the data carrier consists of a plurality of different layers, the layers are laminated.

To produce data carriers, such as credit cards or other contactless and/or dual interface smartcards, with different colors different colored sheets which are needed for the construction of the data carrier have to be kept on stock. Hence, a large inventory is needed to support short delivery times for producing the data carrier. Furthermore, it is time consuming to produce needed sheets in the right color. This process can take several weeks to match the right color and involve lots of efforts including money until the final color match is found.

A further disadvantage of using different colored layers for producing a data carrier is that the performance of such a data carrier is not as good as data carriers with white cards (i.e. having the color of the plastic material used for the different layers) because of the used fillers in the sheet material to achieve the color which is needed.

It is therefore an object of the present invention to provide a method for producing a data carrier having a colored edge where a desired color can be provided in an easy manner.

It is a further object of the present invention to provide a method for producing a data carrier which enables reduction of an inventory as well as a decreased reaction time for new colors.

It is a further object of the present invention to provide a method for producing a data carrier which enables providing a data carrier having improved mechanical properties.

It is still a further object to provide a data carrier with improved mechanical properties and colored edges.

These objects are solved by a method according to the features of claim 1. Preferred embodiments are set out in the dependent claims.

According to the invention, a method for producing a data carrier, in particular formed as an IC card, is provided. The data carrier may be a credit card having a contactless or contact-based interface. The data carrier may be an IC card having a dual interface. In general, the data carrier may be regarded as a smartcard. The method comprises the steps of providing at least one flat layer each made of a desired plastic material, the color of the at least one layer being a result of the desired plastic material; manufacturing a substantially flat data carrier body from the at least one flat layer, the data carrier having a circumferential edge; applying, a desired color on the circumferential edge of the data carrier body.

A data carrier manufactured according to the invention may be in particular formed as an IC card. It comprises a substantially flat data carrier body having a circumferential edge and consisting of at least one flat layer, each of the at least one flat layer being made of desired plastic material, the color of the at least one layer being a result of the desired plastic material. A thin layer of the desired color on the circumferential edge of the data carrier body covers the color of at least one layer resulting from the desired plastic material of the at least one layer.

The data carrier body may consist of one layer of the desired plastic material. Alternatively, it may consist of a plurality of layers each made of the desired plastic material which are laminated or glued together. However, the data carrier body can be produced in various ways as known from prior art. The at least one flat layer of the data carrier body may be made of a plastic material such as PVC, ABS, PC or PET or other materials and/ or material combinations. The desired plastic material does not have to be furnished with any colored fillers. Instead, a desired color is applied directly on the resulting circumferential edge of the data carrier body. This enables the provision of a data carrier having a high quality with regard to the colored edges.

Since, regardless of the color of the edges, the same flat layer of the desired plastic material can be used, a significant reduction of an inventory is possible. Furthermore, the response times for new colors can be realized faster since only the desired color for the application step has to be chosen. Furthermore, the mechanical stability of the data carrier can be increased since the desired plastic material does not have to be changed by the provision of color fillers.

The step of manufacturing the data carrier body comprises providing an upper color layer having a desired color or design, wherein the color on the circumferential edge of the data carrier is adapted to the color or design of the upper color layer, for example. The desired color or design of the upper color layer can be printed on the upper cover layer. The upper cover layer can be protected by a transparent protection layer.

As a result, it is very easy to adapt the color of the circumferential edge to the color or design of the upper cover layer regardless of the color of the used material for providing the data carrier body.

According to an example useful for understanding the invention, the step of applying the desired color comprises spraying with a spraying unit the color on the circumferential edge. The spraying unit may be moved or circled around the carrier body to apply the desired color on the circumferential edge of the data carrier body. However, the data carrier body may be turned while the spraying unit is fixed or is moved in a direction orthogonal to a direction of extension of the data carrier body. In the latter, the data carrier body and the spraying unit move relative to each other.

In a second example useful for understanding the invention, the step of applying the desired color comprises a color transfer by means of a spinning tool which is soaked with the desired color. The spinning tool may be pressed against the edge of the data carrier body. It is preferred that the spinning tool is made of a harder material than the data carrier body. In that case, the color cannot flow above the edges of the data carrier body to the surface of the data carrier body.

In accordance with the invention, the step of applying the desired color comprises applying a color foil which is coated with an adhesive to the circumferential edge. The adhesive properties of the adhesive may be activated by a step of heating the adhesive. As such, the data carrier body to which the colored foil is stacked may be heated in a heater unit. Alternatively, the activation of the adhesive is made by applying the colored foil with a heated rotating roller which presses, at the time of applying the colored foil, the colored foil to the edge of the data carrier body. This process is similar to the process of applying a magnetic strip on the data carrier surface with the difference that the colored foil is applied to the circumferential edge of the data carrier body.

To enable this procedure, the data carrier body may be turned while the heated rotating roller presses the colored foil to the edge of the data carrier body. The heated rotating roller may be fixed while the data carrier body is moved and circled. Alternatively, it may be moved in a direction parallel to a direction of extension of the data carrier body. In this alternative, the data carrier body may be fixed or moved/circled as well.

The application of the desired color on the circumferential edge of the data carrier body may be made on a single data carrier body or a pile of data carrier bodies. According to the latter, a plurality of data carrier bodies is stacked atop each other to form a pile before the step of applying the desired color on the circumferential edge is carried out.

It is further preferred that the data carrier body or the pile of data carrier bodies is punched or cut to provide sharp and straight edges. This ensures, in particular if the desired color is sprayed on the circumferential edges, that the sprayed color will not appear on the main surfaces of the data carrier body.

Dependent from the used plastic material of the at least one layer of the data carrier body the color of the at least one layer is transparent or white without having any color fillers in the base material.

The invention will be explained in more detail by reference to the accompanying figures.
Fig. 1 shows a partial sectional view of a pile of data carrier bodies having sharp and straight edges where the edges are colored by spraying in a method in accordance with an example useful for understanding the invention.
Fig. 2 shows a partial cross-sectional view of a single data carrier body where a cutting process is made to provide sharp and straight edges.
Fig. 3 shows a partial cross-sectional view of a pile of data carrier bodies with circumferential rounded edges.
Fig. 4 shows a plain view on a data carrier body where a desired color is applied by means of a spinning tool which is soaked with the desired color in a method in accordance with an example useful for understanding the invention.

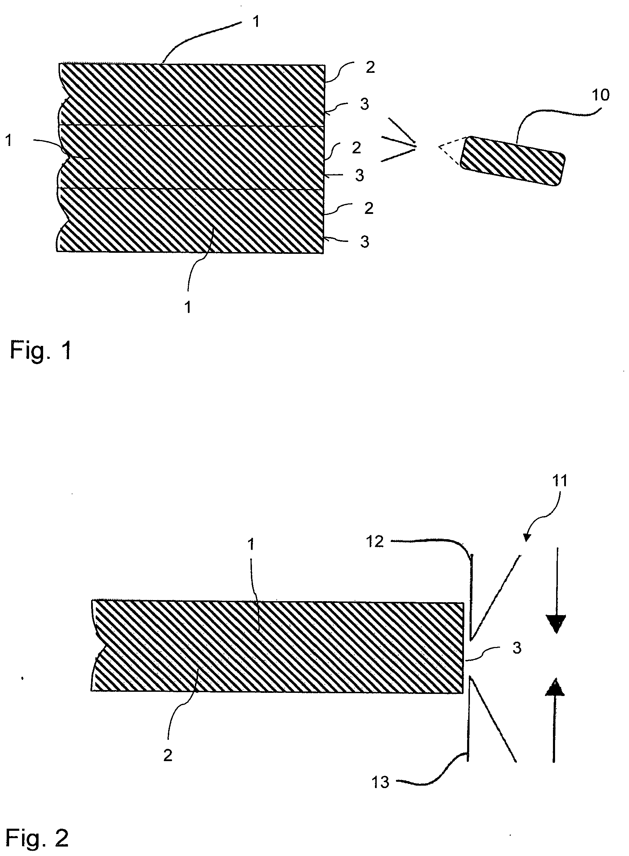

Fig. 1 shows the application of a desired color on the circumferential edge 3 of a data carrier body 1 by spraying. Each data carrier body 1 consists of one or more layers of a desired plastic material, such as PVC, ABS, PC or PET or other materials and/or material combinations. If the data carrier body 1 consists of more than one layer, the plurality of plastic layers is laminated or glued together. For the sake of simplicity, the data carrier bodies 1 in the figures show one layer 2 made of plastic material.

The data carrier body 1 may be a credit card having a contactless or contact-based interface. It also may be a dual interface smartcard or it could also be a card without any electronic or could also have other electronic devices as e.g. displays or fingerprint sensors. The data carrier body will be produced in any desired method which is known to provide a data carrier formed as an IC card. It is to be noted that regardless of the desired color of the circumferential edges of the data carrier 1 the number of layers forming the data carrier body do not consist of any colored fillers. According to the at least one used plastic material of the layer the color typically is white or transparent.

The at least one layer 2 may be supplied as a sheet or endless role from which a plurality of data carrier bodies can be manufactured. By punching individual data carriers out of the at least one sheet or endless role, the resulting form of the data carrier body 1 is achieved.

As illustrated in Fig. 1, after having manufactured the data carrier bodies 1 they are stacked atop each other to build a pile. By way of example, in Fig. 1 three data carrier bodies are stacked atop each other. However, the number of data carrier bodies 1 could be larger. It is to be noted that building a pile is just an option. The method described could be applied to a single data carrier body as well.

Using a spraying unit 10, the edges 3 of the data carrier bodies 1 are applied with a desired color. The spraying unit 10 might circle around the piled data carrier bodies 1. Alternatively, the spraying unit 10 might be stationary and only moves in a direction the pile is extending (i.e. in the drawing from top to below, and vice versa and/ or additional diagonal) and the pile of the data carrier bodies 1 will turn or the spraying unit 10 will turn around the stationary pile of cards.

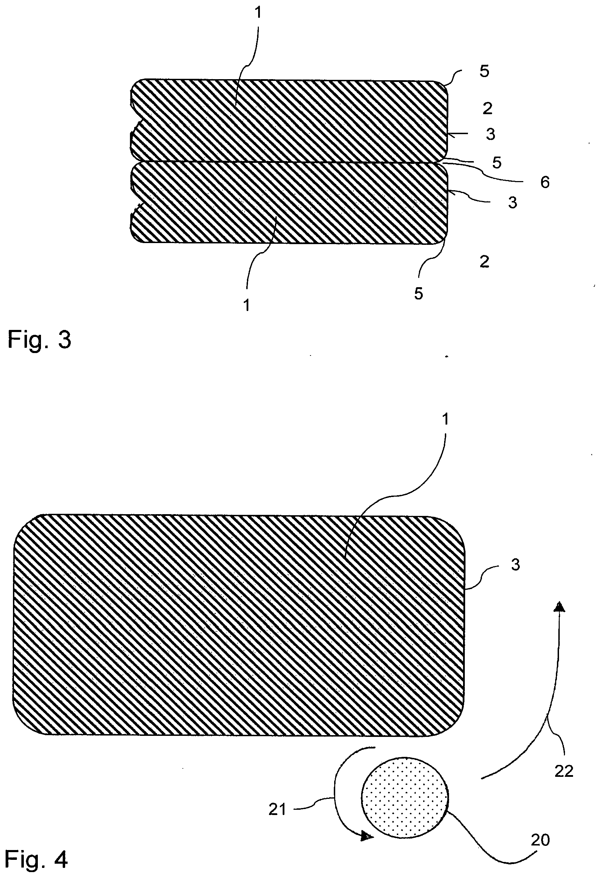

To ensure that only the circumferential edges are applied with the desired color, the edges 3 have to be straight and sharp as illustrated in Fig. 1. However, after manufacturing the single data carrier bodies 1 may have rounded edges 5 as shown in Fig. 3. As a result, between two adjacent data carrier bodies 1 a depression 6 might gather color such that after spraying the color on the edges the color might also partially appear on an upper and/or bottom surface of the data carrier bodies 1. To avoid this, the data carrier bodies will be punched out of the already mentioned sheets or role as illustrated in Fig. 2.

By using a punching tool 11 having to knives 12 and 13 a data carrier body 1 having rectangle edges 3 can be achieved. The arrows besides the knives 12 and 13 indicate the direction of movement of the knives 12, 13 to achieve the rectangular edge 3. This cutting process should be made with each single data carrier body 1 as Fig. 2 illustrates. However, this process of cutting may be made after a pile of data carrier bodies 1 has been formed as well.

In an alternative example useful for understanding the invention, illustrated in Fig. 4, the data carrier body 1 is surrounded by a spinning tool 20 which is soaked coated with the color which is needed on the circumferential edge of the data carrier body 1. The direction of movement is denoted with 22. The soaked spinning tool 20 (the direction of rotation is denoted with arrow 21) presses against the edges 3 of the data carrier body 1 and transfers the color to the card material at the edges 3.

If the soaked spinning tool 20 is made of a hard material (harder than the material of the data carrier body 1) a color does not flow above the edges 3 of the data carrier body 1 to the surface of the data carrier body. As above, this kind of applying the color could be done on a single data carrier body 1 as well as on a pile of data carrier bodies 1.

In an embodiment of the invention which is not shown in the figures, a colored very thin foil, e.g. less than 15 microns, may be used to apply the color on the edges 3 of the data carrier body or pile of bodies 1. The colored foil is coated with a heat activatable adhesive. Then the colored foil may be paced around the edges of the data carrier body 1. During the placement of the colored foil, a heated roller activates the adhesive and the foil sticks to the edges of a data carrier body 1. This process is similar to the application of a magnetic strip on the surface of the data carrier body 1. However, the application of the colored foil takes place on the edges instead of the surface of the data carrier body. Again, this kind of application of color can be carried out on a single data carrier body as well as on a pile of data carrier bodies.

The method described enables the adaption of a color of the edge of a data carrier body to the color or design which is provided on the surface of the data carrier body. The color or design may be provided on an upper cover layer, e.g. by printing.

Since the edge of a data carrier body can be colored in any desired color after production of the data carrier body, it is possible to reduce response times for wanted new colors. Furthermore, a significant reduction of an inventory of the base material of the data carrier can be realized, since the coloring is made in subsequent manufacturing steps. Moreover, if a base material having no color fillers incorporated in it is used to produce a data carrier body, the mechanical stability of a data carrier made of such an untreated material is enhanced.

### Reference list

- 1: data carrier body
- 2: layer
- 3: edge
- 4: upper cover layer
- 5: rounded edge
- 6: depression
- 10: spraying unit
- 11: punching tool
- 12: knife
- 13: knife
- 20: spinning tool
- 21: direction of rotation
- 22: direction of movement

## Claims

1. A method for producing a data carrier, in particular formed as an IC card, comprising the steps of:
a) providing at least one flat layer (2) each made of a desired plastic material, the color of the at least one layer (2) being a result of the desired plastic material;
b) manufacturing a substantially flat data carrier body (1) from the at least one flat layer (2), the data carrier having a circumferential edge (3); and
c) applying a desired color on the circumferential edge (3) of the data carrier body (1), and wherein the step of applying the desired color comprises applying of a colored foil which is coated with an adhesive to the circumferential edge (3).

2. The method according to claim 1, wherein the step of manufacturing the data carrier body (1) comprises providing an upper cover layer (4) having a desired color or design, wherein the color on the circumferential edge (3) of the data carrier is adapted to the color or design of the upper cover layer (2).

3. The method according to claim 1 or 2, wherein the adhesive properties of the adhesive are activated by a step of heating the adhesive.

4. The method according to claim 3, wherein activation of the adhesive is made by applying the colored foil with a heated rotating roller which presses, at the time of applying the colored foil, the colored foil to the edge (3) of the data carrier body (1).

5. The method according to one of the preceding claims, wherein a plurality of data carrier bodies is stacked atop each other to form a pile, before the step of applying the desired color on the circumferential edge (3) is carried out.

6. The method according to one of the preceding claims, wherein the data carrier body (1) or the pile of data carrier bodies according to claim 5 is punched or cut to provide sharp/straight edges.

## Patentansprüche

1. Verfahren zur Herstellung eines Datenträgers, insbesondere ausgebildet als IC-Karte, umfassend die Schritte:
a) Bereitstellen mindestens einer ebenen, jeweils aus einem gewünschten Kunststoffmaterial hergestellten Schicht (2), wobei die Farbe der mindestens einen Schicht (2) ein Ergebnis des gewünschten Kunststoffmaterials ist;
b) Herstellen eines im wesentlichen ebenen Datenträgerkörpers (1) aus der mindestens einen ebenen Schicht (2), wobei der Datenträger eine Umfangskante (3) besitzt; und
c) Aufbringen einer gewünschten Farbe auf die Umfangskante (3) des Datenträgerkörpers (1), und wobei der Schritt des Aufbringens der gewünschten Farbe das Aufbringen einer farbigen Folie umfasst, die mittels eines Klebstoffs auf die Umfangskante (3) beschichtet wird.

2. Verfahren gemäß Anspruch 1, wobei der Schritt des Herstellens des Datenträgerkörpers (1) das Bereitstellen einer oberen Deckschicht (4) umfasst, die eine gewünschte Farbe oder ein gewünschtes Design besitzt, wobei die Farbe auf der Umfangskante (3) des Datenträgers angepasst wird an die Farbe oder das Design der oberen Deckschicht (2).

3. Verfahren gemäß Anspruch 1 oder 2, wobei die Klebstoffeigenschaften des Klebstoffs durch einen Schritt des Erhitzens des Klebstoffs aktiviert werden.

4. Verfahren gemäß Anspruch 3, wobei die Aktivierung des Klebstoffs durch Aufbringen der farbigen Folie mittels einer beheizten Drehwalze erfolgt, welche die farbige Folie zur Zeit des Aufbringens der farbigen Folie auf die Umfangskante (3) des Datenträgerkörpers (1) drückt.

5. Verfahren gemäß einem der voranstehenden Ansprüche, wobei eine Mehrzahl von Datenträgerkörpern aufeinander gestapelt werden, um einen Stapel zu bilden, bevor der Schritt des Aufbringens der gewünschten Farbe auf die Umfangskante (3) durchgeführt wird.

6. Verfahren gemäß einem der voranstehenden Ansprüche, wobei der Datenträgerkörper (1) oder der Stapel von Datenträgerkörpern gemäß Anspruch 5 gestanzt oder geschnitten wird, um scharfe/gerade Kanten bereitzustellen.

## Revendications

1. Procédé destiné à produire un support de données, se présentant en particulier sous la forme d'une carte IC (integrated Chip, à puce intégrée), comprenant les étapes consistant à :
a) fournir au moins une couche plate (2), chacune fabriquée dans une matière plastique souhaitée, la couleur de la au moins une couche (2) étant un résultat de la matière plastique souhaitée ;
b) fabriquer un corps de support de données en grande partie plat (1) à partir de la au moins une couche plate (2), le support de données présentant un bord circonférentiel (3), et
c) appliquer une couleur souhaitée sur le bord circonférentiel (3) du corps de support de données (1), et dans lequel l'étape pour appliquer la couleur souhaitée comprend l'application d'une feuille colorée, laquelle est recouverte d'un adhésif sur le bord circonférentiel (3).

2. Procédé selon la revendication 1, dans lequel l'étape pour fabriquer le corps de support de données (1) comprend la fourniture d'une couche de couverture supérieure (4) présentant une couleur ou finition souhaitée, et dans lequel la couleur sur le bord circonférentiel (3) du support de données est adaptée à la couleur ou finition de la couche de couverture supérieure (2).

3. Procédé selon la revendication 1 ou 2, dans lequel les propriétés adhésives de l'adhésif sont activées par une étape de chauffage de l'adhésif.

4. Procédé selon la revendication 3, dans lequel l'activation de l'adhésif est réalisée en appliquant la feuille colorée avec un rouleau rotatif chauffé, lequel presse, lors de l'application de la feuille colorée, la feuille colorée sur le bord (3) du corps de support de données (1).

5. Procédé selon l'une quelconque des revendications précédentes, dans lequel une pluralité de corps de support de données est empilée les uns sur les autres afin de former un empilement, avant de réaliser l'étape d'application de la couleur souhaitée sur le bord circonférentiel (3).

6. Procédé selon l'une quelconque des revendications précédentes, dans lequel le corps de support de données (1) ou l'empilement de corps de supports de données selon la revendication 5 est poinçonné ou découpé pour fournir des arêtes vives/bords droits.
